# EUROPEAN PATENT APPLICATION

(11) **EP 1 326 173 A1**
(43) Date of publication of application: **09.07.2003**
(21) Application number: 00951921.6
(22) Date of filing: 09.08.2000
(51) Int. Cl.: G06F 15/00, H04N 7/173, G11B 20/10

(54) **CONTENTS DISTRIBUTION SYSTEM AND DISTRIBUTED CONTENTS REPRODUCING DEVICE**

(71) Applicant: Kanars Data Corporation, Tokyo 101-0031 (JP); Pentax Corporation, Tokyo (JP)
(72) Inventor: SEKIGUCHI, Hiroshi, Chiyoda-ku, Tokyo 101-0031 (JP)
(74) Representative: HOFFMANN - EITLE
(86) International application number: JP0005344
(87) International publication number: WO02013027

(57) **Abstract**

The present invention relates to a contents distribution system and contents reproduction apparatus having a structure for guaranteeing that a specific data, such as CM, is reproduced for certain when the contents data including this specific data is reproduced at the terminal apparatus side. In the contents distribution system, the control means in the terminal apparatus switches the reproduction operation modes of the contents data recorded in a predetermined recording medium, between the restricted operation mode, which restricts the operation input for the reproduction operation, and the non-restricted operation mode, which accepts the operation input for the reproduction operation in a preset range, depending on the data included in this contents data. By this, specific data, such as CM, included in the distributed contents data, can be forcibly viewed/listened to by the user who attempts to view/listen to the contents.

## Description

### Technical Field

The present invention relates to a contents distribution system for distributing specified contents from a specific server to a client which requested distribution, through such cable or radio transmission represented by a cable TV network, an Internet network such as a public telephone network, and a satellite communication line, and a reproduction apparatus (terminal apparatus) for the distributed content.

### Background Art

An information providing means which has long been known is TV broadcasting and radio broadcasting, where information is distributed from a specific broadcast station to an unspecified number of a general viewership unilaterally. The communication format of this TV broadcasting and radio broadcasting has generally been a configuration where the viewership receives information distributed from a specific broadcast station using a dedicated receiver (TV or radio) owned by the viewership. In particular, in the case of an information providing means represented by TV broadcasting, information is unilaterally distributed from the broadcast station to the viewership, so each member of the viewership can select a broadcast station, but cannot select the information content distributed from the selected broadcast station in the current situation.

In such a unilateral communication format, advertisement information (hereafter called CM) at each predetermined time is included into the information distributed from the broadcast station to each of the viewership, excluding some broadcast stations. The viewership who once selected a specific broadcast station cannot view/listen to only the contents unless the broadcast station, which is the information source, is changed, and is therefore forced to view/listen to a CM, therefore it is widely documented in societies that CM distribution, using such information providing means, exhibits enormous advertisement functions. In a broadcasting station which distributes CM, a broadcasting service has been established where the viewership can view/listen to information provided by the broadcasting station free of charge, since the advertising income acquired for CM distribution can be a major income source.

On the other hand, various interactive information providing means are implemented, whether cable or radio, because of the recent organization of an information infrastructure, including the Internet and portable telephone networks, and contents distribution services, which distribute movie data and music data specified by a specific user, has begun. In such a contents distribution service, the user records the distributed contents data to a predetermined recording medium (e.g. hard disk, memory card for portable terminal apparatus), and the user reproduces the recorded contents data at a convenient time and location. If the user owns a personal computer (hereafter called PC), or a portable terminal apparatus such as a portable telephone or mobile PC, the user can use such a contents distribution system only if a service contract has been established, so it is anticipated that the number of users of such services will expand continuously in the future.

### Disclosure of the Invention

After studying conventional contents distribution services, the present inventor discovered the following problems. In the current situation, a service providing fee in the above mentioned contents distribution services is generally charged to users, unlike TV broadcasting. In the case of such an accounting format where the user is charged a service providing fee, an increase in the number of users may not be expected due to the fee imposed on users. So in such a contents distribution service as well, service providers are considering attempts to lower the fee imposed on users or to make the service free by providing CM to users along with the specified contents by adding CM to the contents data (generating income by advertisements to be a major income source, instead of a service providing fee paid by users).

However, in a contents distribution service where a further increase in the number of users is expected in the future, the contents data to be distributed is recorded in a predetermined recording medium at the user side, so if the user performs an operation to skip an added CM when the recorded contents data is reproduced, it is possible that the advertisement functions may not be presented.

To solve these problems, it is an object of the present invention to provide a contents distribution system and the reproduction apparatus for the distributed contents, which have a structure for guaranteeing an accurate reproduction of the specified data where contents data, including such specific data as CM, is reproduced at the terminal apparatus side.

The contents distribution system according to this invention is a global scale data communication system, wherein when a terminal apparatus requests distribution, the contents data specified by the terminal apparatus is distributed from a specific distribution apparatus, such as a server, to the terminal apparatus through cable or radio communication transmission, and allowing to provide such specific contents as music and images to the user who requests distribution primarily through a cable TV network, Internet network such as a public telephone network, and communication lines represented by satellite communication lines.

As for the format of using such a contents distribution system, the user stores the distributed contents data in a recording medium (e.g. a PC hard disk or memory card used for a mobile PC), so that the user can freely reproduces the contents data without being restricted by time and place.

In the contents distribution system according to the present invention, the above mentioned distribution apparatus comprises data transmission means for distributing the contents data having a structure where a second reproduction data, which is forcibly reproduced, is disposed at one or more arbitrary positions of a first reproduction data, which corresponds to the contents specified by the above mentioned terminal apparatus, and the identification information for identifying the first and second reproduction data respectively is added, is distributed to the terminal apparatus. The terminal apparatus, that is the reproduction apparatus for the distributed contents data according to the present invention, on the other hand, comprises reproduction means for reading the contents data from a predetermined recording medium where the contents data distributed from the distribution apparatus is recorded, and reproducing the read contents data, and control means for switching the operation mode of the terminal apparatus when the contents data is reproduced by the reproduction means, between a non-restricted operation mode, which accepts operation input for the reproduction operation targeting a preset range when the first reproduction data out of the read contents data is reproduced, and a restricted operation mode, which restricts a part of the operation input for the reproduction operation when the second reproduction data is reproduced, depending on the type of data to be reproduced by the reproduction means.

Since the control means controls the reproduction of the contents data in restricted operation mode, which restricts the operation input for the reproduction operation of the second reproduction data, which is CM, for example, to be forcibly viewed/listened to, when the second reproduction data is reproduced (allows operation input only for limited functions, such as rewind reproduction excluding a partial operation such as skip reproduction, repeat reproduction and reproduction stop, for the second reproduction data during reproduction), the second reproduction data, including the distributed contents data, can be reproduced for certain for users who attempt to view/listen to the contents (the second reproduction data, such as CM, can be forcibly viewed/listened to by the user) .

When a CM is provided as the second reproduction data, however, the contents data to be distributed has a structure where one or more types of contents are included, and one or more types of second reproduction data are disposed at a plurality of locations of these contents groups, so the effect of an advertisement is not presented even if the reproduction of all the contents is enabled one second reproduction data is viewed/listened to. So in order to improve the effect of an advertisement, contents reproduction by the user must be restricted so that the contents can be viewed/listened to free of charge on the condition that each CM is viewed/listened to for a specified number of times (e.g. five times), or only a part of the contents can be viewed/listened to when a specified CM is viewed/listened to. To fully exhibit the advertisement functions of a CM added to the contents data, it is preferable that the control means sets the data range to be the instruction target of the reproduction operation in the non-restricted operation mode, out of the contents data each time that restricted operation mode is switched to the non-restricted operation mode.

In order to confirm that the user viewed/listened to the second reproduction data, such as CM, the control means may shift from the restricted operation mode to the input wait mode, which accepts input from the operator of the terminal apparatus, each time the reproduction operation of the second reproduction data ends, then switches to the non-restricted operation mode after this input wait mode ends. A possible condition to end the input wait mode is, for example, a dial tone or voice message is output to the user when the reproduction operation of the second reproduction data ends, and the user inputs within several seconds (if the user does not input within several seconds, the second reproduction data is reproduced again). The second reproduction data included in the contents data to be distributed is not limited to a CM. In the case of such contents as language learning, a part of one or more second reproduction data disposed in the contents data may be test information to evaluate the degree of achievement of learning, where a condition of ending the input wait mode is where the user inputs the answers for such a test.

Additionally, it is preferable that the terminal apparatus further comprises status holding means for holding at least information on the type of data which was being reproduced when the reproduction of the contents data by the reproduction means is interrupted. This is because the extent that a user watches/listens to second reproduction data can be managed by the terminal apparatus itself. As the status holding means, a non-volatile recording apparatus, which can be written to repeatedly, such as a flash memory, can be used. The terminal apparatus may further comprise reception means for receiving the contents data distributed through the communication line, and data recording means for recording the contents data received by this reception means to the predetermined recording medium. At this time, it is preferable that the data recording means creates a position identification table, where information on the recording positions of the first reproduction data and information on the recording positions of the second reproduction data included in the contents data, are recorded, in the predetermined recording medium where the distributed contents data has been recorded. This is because high-speed access has become possible, and the position identification table can be used to specify the operation target data range out of the first reproduction data. Comprising all these reception functions and data recording functions are not essential conditions, since it is quite possible that only a memory card, where the distributed contents data is recorded by a PC, is used (terminal apparatus having only a reproduction function).

Considering implementing a more advanced service of the contents distribution system, it is preferable that the terminal apparatus further comprises data transmission means so that data communication among the distribution apparatuses becomes possible. For example, if the information on the number of times of CM reproduction and the information on the answers of a test are stored in the status holding means as is or after encryption, such holding data can be transmitted to the service provider side at each predetermined time or by the operation of the user. When the holding information is sent to the service provider side through a communication line, in particular, then it is preferable to encrypt the holding information from a security point of view. The service provider side who received the holding information can provide further added value to the user, such as providing coupons, as an incentive to the user. If a survey is conducted using second reproduction data, effective market research becomes possible through the data transmission means in this terminal apparatus.

Each embodiment of the present invention will be even more sufficiently understood by the following descriptions and accompanying drawings. These embodiments are presented merely as examples, and shall not limit the present invention.

Further scope of this invention will be clarified by the following descriptions. The descriptions and specific examples show the preferred embodiments of the present invention, but are only examples, and it is obvious to experts in this art, based on the descriptions below, that various modifications and improvements are possible within the spirit and scope of the present invention.

### Brief Description of the Drawings

Fig. 1 is a diagram conceptually depicting each embodiment according to the present invention;
Fig. 2 is a diagram depicting the data structure of the contents data to be distributed through a communication line;
Fig. 3 is a diagram depicting the structure of a terminal apparatus (reproduction apparatus for distributed content according to the present invention) in the contents distribution system according to the present invention;
Fig. 4 is a time chart depicting the reproduction operation at the terminal apparatus side in the first embodiment of the present invention;
Fig. 5 is a flow chart depicting the reproduction operation at the terminal apparatus side in the first embodiment of the present invention;
Fig. 6 is a flow chart depicting interrupt processing at the terminal apparatus side in the first embodiment of the present invention;
Fig. 7 is a time chart depicting the reproduction operation at the terminal apparatus side in the second embodiment of the present invention;
Fig. 8 is a flow chart depicting the reproduction operation at the terminal apparatus side in the second embodiment of the present invention; and
Fig. 9 is a flow chart depicting input wait mode at the terminal apparatus side in the second embodiment of the present invention.

### Best Modes for Carrying Out the Invention

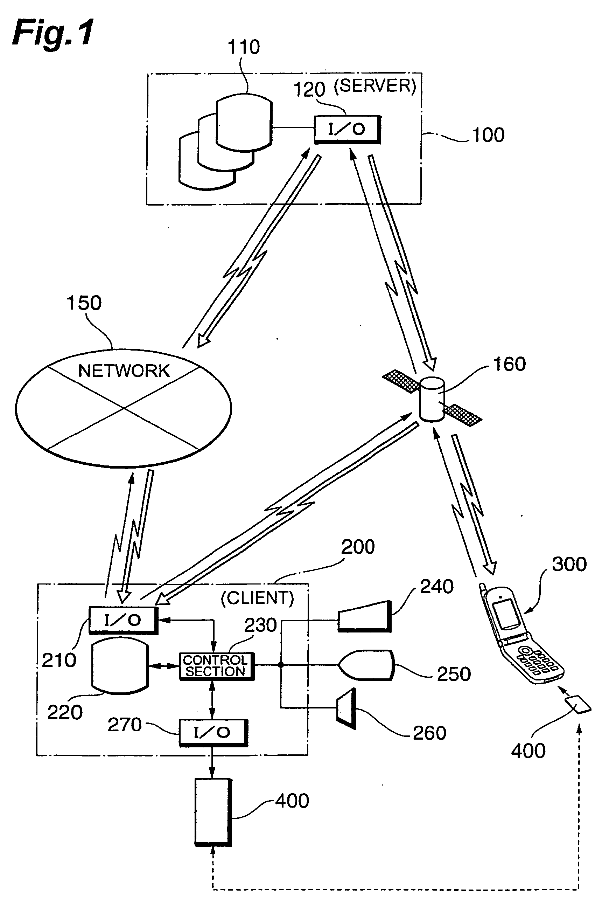

Embodiments of the contents distribution system and the reproduction apparatus for the distributed contents according to the present invention will now be described with reference to Fig. 1 to Fig. 9. In each drawing, the same composing elements are denoted with the same numerals, where redundant descriptions are omitted.

The contents distribution system according to the present invention is a global scale data communication system, wherein when a terminal apparatus (reproduction apparatus for distributed contents according to the present invention) requests distribution, the contents data specified by the terminal apparatus is distributed from a specific distribution apparatus, such as a server, to the terminal apparatus through cable or radio communication transmission, and allows to individually provide such specific contents as music and images to the user who requested distributed primarily through a cable TV network, an Internet network such as a public telephone network, and a communication line represented by a satellite communication line. As a format of using such a contents distribution system, various modes are possible because of recent developments of digital technologies and the preparation of data communication environments. Fig. 1 is a diagram conceptually depicting each embodiment according to the present invention.

As Fig. 1 shows, in the contents distribution system according to the present invention, the server 100 as the distribution apparatus comprises a storage apparatus 110 where the contents data to be distributed according to the request of the user is temporarily stored, and data transmission means 120 (I/O) for distributing the contents data to a terminal apparatus at the user's side, such as PC 200 and a portable terminal apparatus 300, through a cable network 150 or radio transmission using a communications satellite 160.

PC 200, which is the terminal apparatus (client), comprises reception means 210 (I/O) for receiving contents data which is distributed from the server 100 through the network 150 or communications satellite 160. The PC 200 comprises a hard disk 220 (H/D) as the external storage means ,and the control section 230 temporarily records the contents data received through the I/O 210 to the H/D 200. The PC 200 further comprises input means 240 (e.g. keyboard, mouse) for accepting the operation input from the user, display means 250 (e.g. CRT, liquid crystal display) for displaying image data, and a speaker 260 for outputting voice data and music data. Because of the recent remarkable developments in portable information processing units, a contents distribution service using a portable telephone as a terminal apparatus and the storage medium 400 (e.g. memory card with about 64 MB recording capacity) , which even a reproduction only apparatus having no communication functions can use, have been commercialized. The PC 200 may have I/O 270 as data recording means to provide, in particular, the recording medium 400 to be used in a reproduction only apparatus which has no communication functions.
The terminal apparatus may be the portable information processing unit 300, which has communication functions, as shown in Fig. 1.

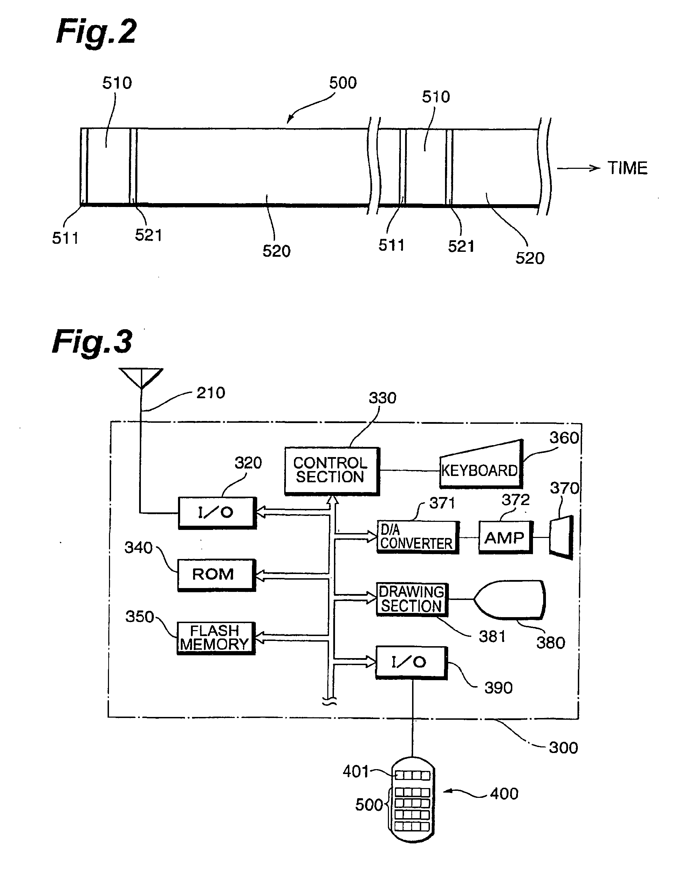

Fig. 2 is a diagram depicting the data structure of the contents data distributed from the server 100 through the network 150 or the communications satellite 160. As Fig. 2 shows, the contents data 500 distributed from the server 100 has a structure where a second reproduction data 510, such as CM, which is forcibly viewed/listened to by users, is disposed at one or more arbitrary positions of a first reproduction data 520 which corresponds to the contents itself, and identification information 521, for recognizing the first reproduction data 520, and identification information 511 for recognizing the second reproduction data 510, are added. In the contents data 500 shown in Fig. 2, the first and second reproduction data 510 and 520 are disposed in the sequence of distribution from the left to right on the page face. If the first and second reproduction data 510 and 520 are distributed by packet communication, the identification information for identifying each data 510 and 520 need not be provided for each data 510 and 520, and identification information may be provided in each packet unit.

Now the configuration of the portable type information processing unit 300 is shown in Fig. 3 as the terminal apparatus. As Fig. 3 shows, the portable type information processing unit 300 has the control section 330, including an MPU for implementing data transmission/reception functions, a reproduction function for contents data 500, an input processing function, a display function, and a data recording function. Specifically, this information processing unit 300 comprises an antenna 310 for receiving contents data 500 distributed through the communications satellite 160, and sending a distribution request and predetermined information to the server 100, and an I/O 320, so as to implement the data transmission/reception functions. As the data recording means, the information processing unit 300 comprises the I/O 390 for recording the received contents data 500 to the memory card 400, and reading the recorded contents data 500 from the memory card 400. In the memory card 400, not only contents data 500 but also the position identification table 401, where information on the recording position of the first reproduction data 520 (contents) included in this contents data 500 and the information on recording the position of the second reproduction data 510 (specific data, such as CM which is forcibly reproduced) are recorded, is recorded. It is possible to use a memory card 400 where the contents data 500 is recorded if PC 200 is used, then in this case the information processing unit 300 does not need the data transmission/reception means. On the contrary, it is also possible to record the contents data 500 distributed by the information processing unit 300 having the data transmission/reception function to the memory card 400, and reproduce the contents data 500 recorded in this memory card 400 at the PC 200 side.

The reproduction function is implemented by voice reproduction means, which is comprised of the D/A converter 371, amplifier 372 and speaker 370, and image reproduction means which is comprised of the drawing section 381, and display section 380, such as a liquid crystal display. The input function is implemented by such input means as the keyboard 360.

The information processing unit 300 further comprises ROM 340 for storing application data to implement various functions of the reproduction program which are executed by the control section 330, and a flash memory 350 as the status holding means for temporarily holding the reproduction/recording of the second reproduction data 520.

### (First Embodiment)

The first embodiment of the contents distribution system according to the present invention will now be described. Since operation at the server side is as described above, the following describes the contents reproduction operation in a portable type information processing unit 300 having the structure shown in Fig. 3, as a terminal apparatus (reproduction apparatus for distributed contents) in this system. It is assumed that the distributed contents data 500 has already been recorded in the memory card 400, and that the distributed contents data 500 may be received by the processing unit 300 itself through the data reception means (antenna 310, I/O 320), and be recorded in the memory card 400, or may be recorded in the memory card 400 in advance using the PC 200. In the contents data 500, distributed from the server 100 to the terminal apparatuses 200 and 300, it is assumed that CM narration (voice data) is disposed as the second reproduction data 510 at the arbitrary positions of the drama voice data (contents) as the first reproduction data 520 (see Fig. 2) .

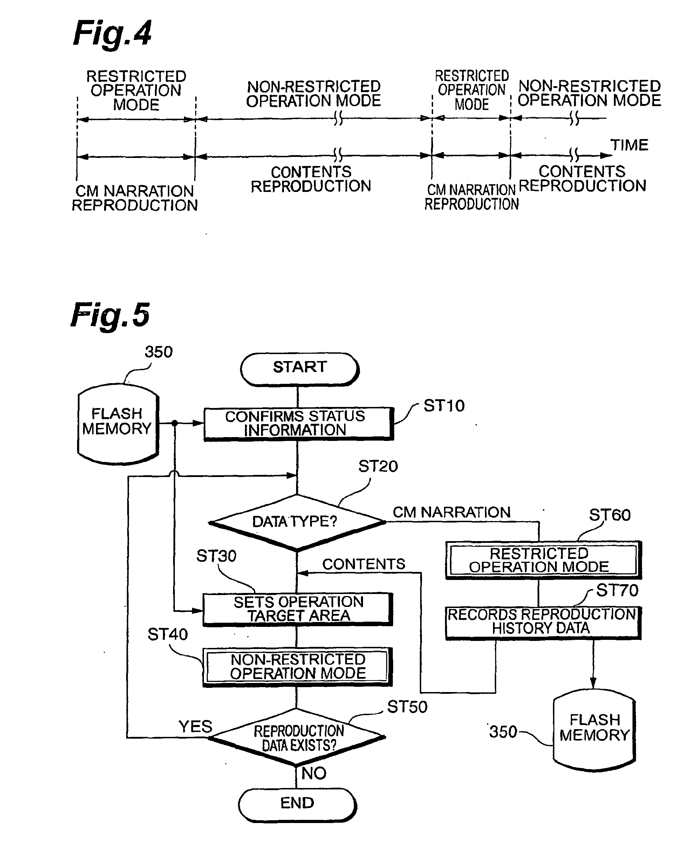

In the case of the first embodiment, the CM narration 510 and the contents 520 are alternately reproduced as the reproduction operation of the contents data 500 by the voice reproduction means 371, 372 and 370, as shown in Fig. 4. Concerning the operation mode of the information processing unit 300 when contents data is reproduced, the control section 330 switches between non-restricted operation mode, which accepts operation input for reproduction operation when reproducing the contents 520 out of the contents data 500 which is read from the memory card 400, and the restricted operation mode, which restricts a part of operation input on the reproduction operation when reproducing the CM narration 510, depending on the type of data, referring to the identification codes 511 and 521 included in the contents data 500.

In this way, the control section 330 controls reproduction in the restricted operation mode, which restricts a part of operation input on the reproduction operation of the CM narration 510 when reproducing CM narration 510 (allows operation input only for limited functions, such as rewind reproduction excluding skip reproduction, repeat reproduction, and reproduction stop when operating CM narration during reproduction 510), so CM narration 510, included in the distributed contents data 500, is forcibly listed to by the user who is attempting to listen to the contents 520.

Fig. 5 is a flow chart depicting the reproduction operation of the information processing unit 300 in the first embodiment. When a reproduction instruction is input, the control section 330 confirms the status when the previous reproduction operation ended by information in the flash memory 350 (step ST10). If the status information is not recorded in the flash memory 350, the control section 330 judges this as a first reproduction operation, and reproduces the contents data 500 from the beginning, and if the reproduction operation was interrupted in the middle of the reproduction of the contents 520 or the CM narration 510, then the control section 330 reproduces the data which was interrupted in the middle of reproduction (step ST20).

When the CM narration 510 is reproduced, the control section 330 executes the restricted operation mode, which allows operation input only for limited functions, such as rewind reproduction excluding skip reproduction, repeat reproduction, and reproduction stop when operating CM narration 510 during reproduction (step ST60), so that the user is forced to listen to CM narration 510. When reproduction of CM narration 510 ends, the reproduction history data, to indicate completion of the reproduction of the CM narration 510, is recorded in the flash memory 350 (step ST70).

Then the control section 330 performs the reproduction operation of the contents 520 (non-restricted operation mode), but prior to this the control section 330 sets the area to be this operation target referring to the reproduction history data of the CM narration 510 recorded in the flash memory 350 (step ST30). This is because the contents data 500 to be distributed has a structure where one or more types of contents 520 are included, and also one or more types of CM narrations 510 are disposed at a plurality of locations of the contents 520, so the effect of an advertisement cannot be presented if the reproduction of all the contents 520 is enabled after one CM narration is listened to. In other words, in order to improve the effect of an advertisement, in this first embodiment, it is necessary to restrict the range which the user can operate so that listening to the contents 520 becomes free of charge on the condition that each CM narration 510 is listened to for a specified number of times (e.g. five times), or only a part of the contents 520 can be listened to corresponding to a complete listening of a specific CM narration 510.

When the range where operation by the user is to be allowed is set in this way, the control section 330 controls the reproduction operation of the contents 520 in the non-restricted operation mode (step ST40). The control section 330 switches the operation modes until all data is reproduced, unless an interrupt request, such as a stop instruction or power OFF, is generated (step ST50).

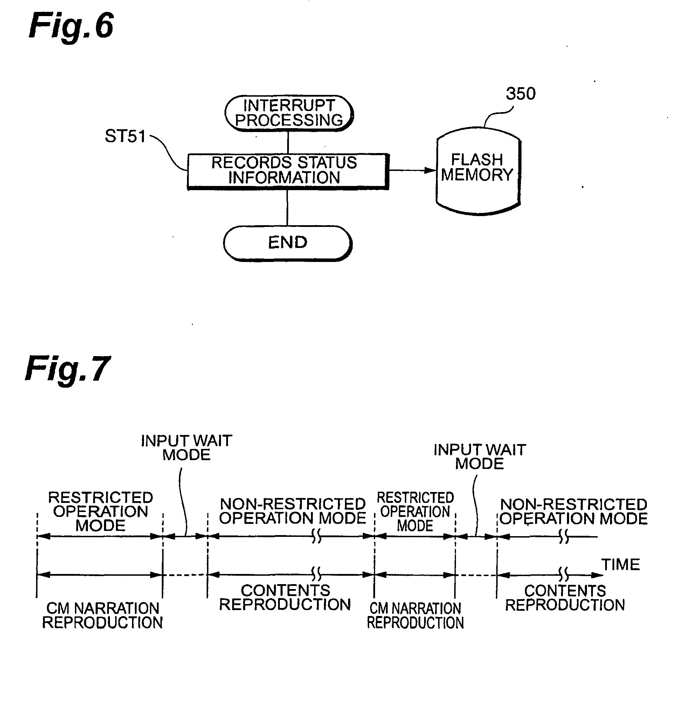

If an interrupt request, such as a stop instruction, is generated, the control section 330 performs interrupt processing (end processing) according to the flow chart shown in Fig. 6. In other words, when an interrupt request is generated, the control section 330 records the status information, which will be referred to in step ST10 in the next reproduction operation, in the flash memory 350 (step ST51), then ends the reproduction operation of the contents data 500.

To implement more advanced services, in the first embodiment, the reproduction history data (information including the number of times of reproduction, which is preferably stored in encrypted status) of the CM narration 510 recorded in the flash memory 350 in the step ST70, for example, is sent to the server 100 side at each predetermined time or by operation of the user, so that further added value, such as providing coupons to the user as an incentive, can be provided. As added value to be provided, distributing one contents data free of charge each time a predetermined number of coupons are stored, or providing premiums according to the stored coupons, are possible.

### (Second embodiment)

Fig. 7 is a time chart depicting the reproduction operation at the terminal apparatus side in the second embodiment of the present invention. The difference between the second embodiment from the above mentioned first embodiment is that input wait mode is executed before the restricted operation mode shifts to the non-restricted operation mode. The input wait mode is provided to accept key input for confirmation from the user to confirm that the user viewed/listened to CM.

In the second embodiment as well, operation at the server side is the same as mentioned above, and in the following description, the contents reproduction operation in the portable type information processing unit 300, which has the structure shown in Fig. 3, is the terminal apparatus (reproduction apparatus of distributed contents) in this contents distribution system is described. It is assumed that the distributed contents data 500 has already been recorded in the memory card 400, and that the distributed contents data 500 may be received by the processing unit 300 itself through the data reception means (antenna 310, I/O 320), and be recorded in the memory card 400, or may be recorded in the memory card 400 in advance using the PC 200. In the contents data 500 to be distributed from the server 100 to the terminal apparatuses 200 and 300, it is assumed that CM narration (voice data) is disposed as the second reproduction data 510 at the arbitrary positions of the drama voice data (contents) as the first reproduction data 520 (see Fig. 2).

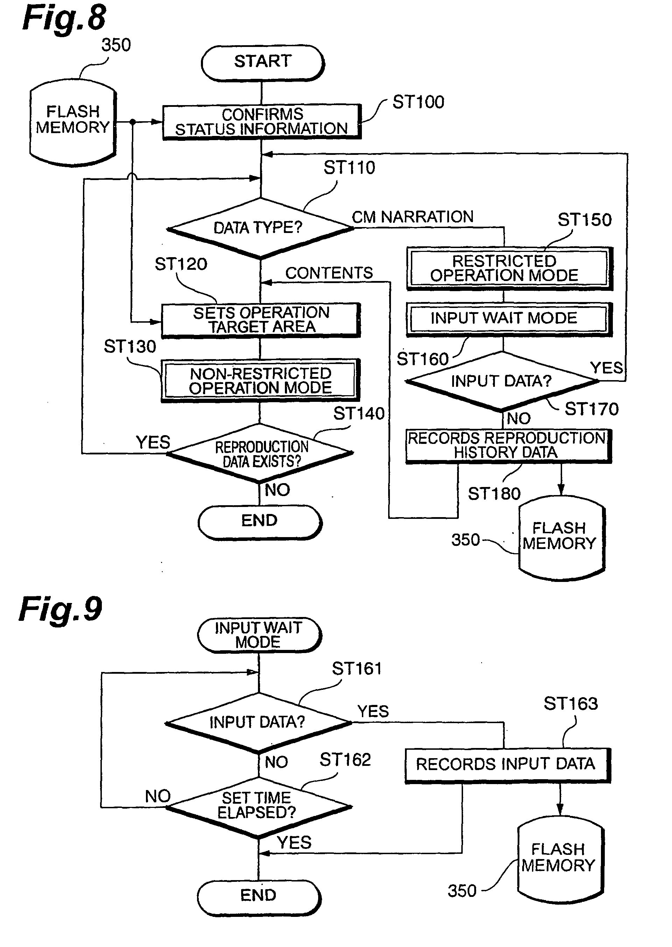

Fig. 8 is a flow chart depicting the reproduction operation of the information processing unit 300 in the second embodiment. When the reproduction instruction is input, the control section 330 confirms the status when the previous operation ended by information in the flash memory 350 (step ST100). If status information is not recorded in the flash memory 350, the control section 330 judges this as a first reproduction operation, and reproduces the contents data 500 from the beginning, and if the reproduction operation was interrupted in the middle of the reproduction of the contents 520 or CM narration 510, then the control section 330 reproduces the data which was interrupted in the middle of reproduction (step ST110).

When the CM narration 510 is reproduced, the control section 330 executes restricted operation mode, which allows operation input only for limited functions, such as rewind reproduction excluding skip reproduction, repeat reproduction, or reproduction stop when operating the CM narration 510 during this reproduction (step ST150), so that a user is forced to listen to the CM narration 510. And in order to confirm that the user listened to the CM narration 510, the control section 330 enters the input wait mode (step ST160). Then in step ST170, the control section 330 confirms whether key input is received from the user during a predetermined time (e.g. one second) from the reproduction end point of the CM narration 510 (outputting an alarm sound or specific voice message, to instruct the user to press a predetermined button). If key input from the user is not confirmed within a predetermined time, the CM narration 510 is reproduced again, and if key input is confirmed, the reproduction history data, to indicate end of the reproduction of the CM narration 510, is recorded in the flash memory 350 when the reproduction of the CM narration 510 is ended (step ST180).

Then the control section 330 performs the reproduction operation of the contents 520 (non-restricted operation mode), but before this, the control section 330 sets the area to be this operation target referring to the reproduction history data of the CM narration 510 recorded in the flash memory 350 (step ST120).

When the range where operation by the user is allowed to be set in this way, the control section 330 controls the reproduction operation of the contents 520 in the non-restricted operation mode (step ST130). The control section 330 switches the operation modes until all data is reproduced, unless an interrupt request, such as a stop instruction or a power OFF, is generated (step ST140).

If an interrupt request, such as a stop instruction, is generated, the control section 330 performs interrupt processing (end processing) according to the flow chart shown in Fig. 6, just like the first embodiment.

Processing in input wait mode is performed according to the flow chart shown in Fig. 9. In other words, when the reproduction operation of the CM narration 510 (restricted operation mode) is ended, an alarm sound or a specific voice message is output to the user, and data input from the user is accepted for several seconds (steps ST161, ST162) . And if data input from the user is received within the preset time, then the input data is recorded in the flash memory 350 (step ST163).

The second reproduction data 510 included in the contents data 500 is not limited to CM. For example, when the first reproduction data 520 is a contents of language learning, it is possible to use a part of the second reproduction data for a test to evaluate the degree of achievement of the learning, and input wait mode is ended on the condition that answers to the test are input from the user.

To implement further advanced services, the information on the number of times of reproducing a CM or information on the answers to a test may be encrypted and held in the flash memory 350, which is the above mentioned status holding means, and this encrypted holding data may be transmitted to the server 100 side at each predetermined time or by operation of the user. The service provider who receives this holding data can provide a further added value to the user by providing coupons to the user as an incentive according to the number of times of reproduction (the same as the first embodiment). If a survey is conducted using the second reproduction data 510 and the result of the survey (preferably to be encrypted in this case as well) is transmitted to the server 100 side, the server 100 side can conduct a useful market research.

The descriptions above clearly show that the present invention can be modified in various ways. Such variant forms do not depart from the spirit and scope of the present invention, and improvements, self evident to experts in the art, shall be included in the claims.

### Industrial Applicability

As described above, according to the present invention, in the terminal apparatus which reproduces the contents data which is recorded in a predetermined recording medium, the control means controls the reproduction of the contents data in the restricted operation mode, where operation input for partial functions, such as fast forward and skip specific data, is not accepted during the reproduction of the specific data targeted to forced viewing/listening, such as CM, and controls the reproduction of the contents data in the non-restricted operation mode, where the operation input for the reproduction operation for a preset range is accepted during the reproduction of the contents itself, so a CM included in the distributed contents data can be forcibly viewed/listened to by the user who attempts to view/listen to the contents.

## Claims

1. A contents distribution system for distributing the contents data specified by a terminal apparatus from a specific distribution apparatus to the terminal apparatus which requested distribution through a communication line,
wherein said distribution apparatus comprises data transmission means for distributing, to said terminal apparatus, the contents data having a structure where a second reproduction data, which is forcibly reproduced, is disposed at one or more arbitrary positions of a first reproduction data, which corresponds to the contents specified by said terminal apparatus, and the identification information for identifying said first and second reproduction data respectively is added; and
wherein said terminal apparatus comprises:
reproduction means for reading the contents data from a predetermined recording medium where the contents data distributed from said distribution apparatus is recorded, and reproducing the read contents data according to the instructed reproduction operation; and
control means for switching the operation mode of said terminal apparatus when said contents data is reproduced by said reproduction means, between a non-restricted operation mode, which accepts the operation input for the reproduction operation when said first reproduction data out of the read contents data is reproduced, and a restricted operation mode, which restricts a part of the operation input for the reproduction operation when said second reproduction data is reproduced, depending on the type of data to be reproduced by said reproduction means.

2. A contents distribution system according to claim 1, wherein said control means sets a data range to be the instruction target of the reproduction operation in said non-restricted operation mode out of said contents data each time switching from the restricted operation mode to the non-restricted operation mode.

3. A contents distribution system according to claim 1 or 2, wherein said control means shifts from the restricted operation mode to the input wait mode, where input from the operator of said terminal apparatus is accepted each time the reproduction operation of said second reproduction data ends, and switches to the non-restricted operation mode after said input wait mode ends.

4. A contents distribution system according to any one of claims 1 to 3, wherein said terminal apparatus further comprises status holding means for holding at least information on the type of data which was being reproduced when the reproduction of the contents data by said reproduction means is interrupted.

5. A contents distribution system according to any one of claims 1 to 4, wherein said terminal apparatus further comprises reception means for receiving said contents data distributed through said communication line, and data recording means for recording the contents data received by said reception means to said predetermined recording medium.

6. A contents distribution system according to claim 5, wherein said data recording means creates a position identification table, where information on the recording positions of said first reproduction data and information on the recording positions of the second reproduction data, included in said contents data, are recorded in said predetermined recording medium where said distributed contents data have been recorded.

7. A contents distribution system according to any one of claims 1 to 6, wherein said status holding means holds the number of times of reproduction of said second reproduction data out of said contents data, and said terminal apparatus further comprises data transmission means for transmitting data on reproduction status of said second reproduction data out of said contents data to said distribution apparatus.

8. A reproduction apparatus for distributed contents for reproducing contents data distributed through a communication line from a predetermined recording medium in which said contents data having a structure, where second reproduction data, which is forcibly reproduced, is disposed at one or more arbitrary positions of a first reproduction data, which corresponds to the contents, and identification information for identifying said first and second reproduction data respectively is added, is recorded, comprising:
reproduction means for reproducing contents data read from said predetermined recording medium; and
control means for switching the operation mode of said terminal apparatus when said contents data is reproduced by said reproduction means, between a non-restricted operation mode, which accepts the operation input for the reproduction operation when said first reproduction data out of the read contents data is reproduced, and a restricted operation mode, which restricts apart of the operation input for the reproduction operation when said second reproduction data is reproduced, depending on the type of data to be reproduced by said reproduction means.

9. A reproduction apparatus for distributed contents according to claim 8, wherein said control means sets a data range to be the instruction target of the reproduction operation in said non-restricted operation mode out of said contents data each time switching from the restricted operation mode to the non-restricted operation mode.

10. A reproduction apparatus for distributed contents according to claim 8 or 9, wherein said control means shifts from the restricted operation mode to the input wait mode where input from the operator of said terminal apparatus is accepted each time the reproduction operation of said second reproduction data ends, and switches to the non-restricted operation mode after said input wait mode ends.

11. A reproduction apparatus for distributed contents according to any one of claims 8 to 10, further comprising status holding means for holding at least information on the type of data which was being reproduced when the reproduction of the contents data by the reproduction means is interrupted.

12. A reproduction apparatus for distributed contents according to any one of claims 8 to 11, further comprising reception means for receiving said contents data distributed through said communication line, and data recording means for recording the contents data received by said reception means to said predetermined recording medium.

13. A reproduction apparatus for distributed contents according to claim 12, wherein said data recording means creates a position identification table, where information on the recording positions of said first reproduction data and information on the recording positions of the second reproduction data, included in said contents data, are recorded in said predetermined recording medium where said distributed contents data have been recorded.

14. A reproduction apparatus for distributed contents according to one of claims 8 to 12, wherein said status holding means holds the number of times of reproduction of said second reproduction data out of said contents data, and data transmission means for transmitting data on the reproduction status of said second reproduction data out of said contents data to said distribution apparatus is further provided.
